# EUROPÄISCHE PATENTSCHRIFT

(11) **EP 0 612 569 B1**
(45) Veröffentlichungstag und Bekanntmachung des Hinweises auf die Patenterteilung: **02.10.1996**
(21) Anmeldenummer: 94102525.6
(22) Anmeldetag: 19.02.1994
(51) Int. Cl.: B05D 5/08

(54) **Beschichtung poröser, hydrophober Substrate mit thermoplastischen Fluorpolymeren**
Process for coating porous hydrophobic substrates with thermoplastic fluoropolymers
Procédé pour revêtir des substrats poreux et hydrophobes avec des fluoropolymères thermoplastiques

(30) Priorität: 24.02.1993 DE 4305618
(43) Veröffentlichungstag der Anmeldung: 31.08.1994
(73) Patentinhaber: HOECHST AKTIENGESELLSCHAFT, 65926 Frankfurt am Main (DE); SGL TECHNIK GMBH, 86405 Meitingen (DE)
(72) Erfinder: Blädel, Hermann, DI (FH), D-84547 Emmerting (DE); Mayer, Franz, Dr., D-84489 Burghausen (DE); Schmid, Manfred, D-86156 Augsburg (DE)

(56) Entgegenhaltungen:
- EP-A- 0 014 974
- WO-A-80/00929
- DE-A- 4 124 730
- FR-A- 2 124 305
- FR-A- 2 275 310
- GB-A- 1 348 775
- GB-A- 2 084 486

## Beschreibung

Die Erfindung betrifft ein Verfahren zum Beschichten von porösen, hydrophoben Substraten mit thermoplastischen Fluorpolymeren, also Fluorpolymeren, die aus der Schmelze verarbeitbar sind, sowie die Verwendung der beschichteten Substrate.

Aus der DE-A-41 24 730 ist ein Verfahren bekannt, bei dem Fluorpolymere in einer Form, in der ihre Teilchen oder die einer Vorstufe wenigstens in einer Dimension kleiner sind als der Durchmesser der Poren oder Kapillaren einer mikroporösen oxidischen Oberfläche, die durch anodische Oxidation von Gegenständen aus Aluminium, Magnesium oder deren Legierungen hergestellt wurde, in diese Oberfläche eingelagert werden. Das bevorzugte Fluorpolymer ist Polytetrafluorethylen, das bekanntlich nicht aus der Schmelze verarbeitbar ist. Als geeignete Fluorpolymere werden genannt die Polymeren und Copolymeren von Tetrafluorethylen, Hexafluorpropen, Vinylidenfluorid, Vinylfluorid und Trifluorchlorethylen, insbesondere deren Homopolymere sowie Tetrafluorethylen-Copolymere. Die Polymerteilchen oder deren Vorstufe sollen eine Teilchengröße von 1 bis 50 nm, vorzugsweise 1 bis 10 nm, haben. Die nicht handelsüblichen Pulver oder Suspensionen sollen durch Kolloid-Mahlverfahren oder durch entsprechend verkürzte Polymerisationszeiten erhalten werden. Die einzulagernde Vorstufe des Fluorpolymeren kann ein Fluormonomeres oder -oligomeres sein, das in den Poren oder auf der Beschichtung auspolymerisiert wird.

Bei den gemäß der DE-A 41 24 730 zu beschichtenden Oberflächen handelt es sich um bevorzugt frisch hergestellte oxidierte Oberflächen, die chemisch sehr reaktionsfähig sind. Im Gegensatz dazu betrifft die Erfindung die Beschichtung von wenig oder gar nicht reaktiven hydrophoben Oberflächen. Bevorzugte Substrate sind Materialien, die chemisch und/oder thermisch stark belastet werden und beispielsweise im chemischen Apparatebau eingesetzt werden wie Carbide, Boride, Silicide und ähnliche Werkstoffe. Bevorzugte Substrate sind Formkörper aus nicht graphitischem Kohlenstoff, aus Graphit oder aus Siliciumcarbid, die in ihrem Ausgangszustand trotz ihres feinkörnigen Aufbaus porös sind. Um diese Formkörper flüssigkeits- beziehungsweise gasdicht zu machen, muß ihr Porensystem mit Kunstharzen mindestens zum Teil gefüllt werden. Für viele Anwendungen ist es auch vorteilhaft, diese Körper zusätzlich mit einem Oberflächenfilm aus Kunstharz zu versehen. Insbesondere der Einsatz der Formkörper in hochreaktiven, aggressiven, beispielsweise oxidierenden, Medien erfordert eine Imprägnierung, die nicht nur die Poren zumindest weitgehend auffüllt, sondern auch einen festhaftenden Überzug auf den Oberflächen erzeugt.

Für solche Überzüge sind bekanntermaßen Fluorpolymere geeignet. Die bisher bekannten Verfahren und Überzugsmittel haben sich jedoch bei hydrophoben Substraten nicht bewährt, da diese Stoffe nicht genügend tief in das Porensystem der Körper eindringen und damit die Überzüge nicht genügend verankert sind. Wenn man entsprechend feinteilige Dispersionen einsetzt und zur Fixierung die überzogenen Substrate erhitzt, erfordern nicht aus der Schmelze verarbeitbare Fluorpolymere wie Polytetrafluorethylen so hohe Temperaturen, daß es zu einer Schädigung des Substrats kommen kann.

Diese Nachteile überwindet das erfindungsgemäße Verfahren, das auch auf porösen, hydrophoben Substraten so wirkungsvolle Überzüge ergibt, daß entsprechend ausgerüstete Formkörper im chemischen Apparatebau auch gegenüber aggressiven Medien eingesetzt werden können.

Bei dem erfindungsgemäßen Verfahren wird ein poröses hydrophobes Substrat mit einer wäßrigen Dispersion eines thermoplastischen Fluorpolymeren einer Teilchengröße im Zahlenmittel bis zu 100 nm in Kontakt gebracht, gegebenenfalls unter Druck, worauf das so imprägnierte Substrat zur Fixierung des Fluorpolymeren thermisch nachbehandelt wird. Bevorzugte Ausgestaltungen dieses Verfahrens sind in den abhängigen Patentansprüchen definiert.

Ausführungsbeispiele der Erfindung werden im folgenden näher erläutert.

Die wäßrige Suspension des Fluorpolymeren enthält bevorzugt Partikel einer Teilchengröße im Zahlenmittel bis zu 50 nm, vorteilhaft bis zu 40 nm, insbesondere bis zu 30 nm. Die Untergrenze der Teilchengröße liegt bei etwa 1 nm, vorzugsweise 10 nm.

Die Wahl des Fluorpolymeren richtet sich nach den Anforderungen: Bei hohen Anforderungen an die chemische Beständigkeit wählt man als Fluorpolymer ein Copolymeres des Tetrafluorethylens mit einem Fluoralkyl-perfluorvinylether, beispielsweise ein Bipolymer mit Einheiten der Formel X-(CF₂)ₙ-O-CF=CF₂, in der X Wasserstoff, Chlor oder bevorzugt Fluor und n eine Zahl von 1 bis 8, vorzugsweise von 1 bis 3 bedeutet. Bei geringeren Anforderungen an die chemische Beständigkeit des Überzugs eignen sich auch preiswertere Fluorpolymere wie Copolymere des Tetrafluorethylens mit Ethylen.

Die Fixierbedingungen richten sich nach den vorhandenen Apparaten und können nötigenfalls durch einfache Vorversuche leicht ermittelt werden. Im allgemeinen wird man den Formkörper zunächst einem Vakuum aussetzen, dann unter Aufrechterhaltung des verminderten Drucks mit der wäßrigen Dispersion in Kontakt bringen, nötigenfalls unter Druck, beispielsweise bei etwa 10 bis 100 bar, und nach der Druckentlastung die überschüssige wäßrige Dispersion abtrennen. Die thermische Fixierung erfolgt bevorzugt zweistufig, zunächst bei einer niedrigen Temperatur in der Größenordnung von 100 bis 150 °C und anschließend bei genügend hoher Temperatur, um ein Sintern beziehungsweise Schmelzen des Fluorpolymeren unter Ausbildung eines möglichst dichten Überzugs zu gewährleisten.

Die Beispiele 1 bis 5 sind Herstellungsbeispiele für eine bevorzugte Dispersion eines Bipolymeren des Tetrafluorethylens mit Perfluor-(propyl-vinyl)-ether, die besonders für gegen Chemikalien hochresistente Überzüge geeignet ist.

### Beispiele 1 bis 5

In einem innen emaillierten Polymerisationsreaktor mit einem Gesamtvolumen von 195 l, versehen mit einem Impellerrührer, werden 118 l entsalztes Wasser eingefüllt und darin 620 g Ammoniumperfluoroctanoat (POA, in Form von 2000 g einer 31%igen Lösung in Wasser, Handelsprodukt der Firma 3M) aufgelöst. Nach Abdichten des Reaktors wird zunächst fünfmal mit Stickstoff und anschließend einmal mit 1,0 bar Tetrafluorethylen gespült.

Nach Entspannen und Aufheizen auf 68 °C werden über eine Leitung 50 g Methylenchlorid und 610 g Perfluorpropylperfluorvinylether (PPVE; 0,75 bar) unter mäßigem Rühren eingepumpt. Die Rührung wird dann auf 170 Upm erhöht. Sodann wird dem Reaktor über die Gasphase Tetrafluorethylen (TFE) zugeführt, bis ein Gesamtdruck von 13,4 bar erreicht ist. Daraufhin startet man die Polymerisation durch Zupumpen von 4,0 g Ammoniumpersulfat (APS), gelöst in 300 ml entsalztem Wasser.

Sobald der Druck zu fallen beginnt, werden über die Gasphase weiteres TFE und PPVE gemäß dem Verbrauch ergänzt, so daß der Gesamtdruck von 13,4 bar aufrechterhalten wird. Die freiwerdende Wärme wird durch Kühlung der Kesselwand abgeführt und so eine Temperatur von 68 °C aufrechterhalten.

Nach Einspeisung von 35,7 kg TFE (innerhalb von 4,1 Stunden) in den Reaktor wird die Monomerenzuführung unterbrochen, der Reaktor entspannt und mehrmals mit N₂ gespült.

Die erhaltene Polymer-Dispersion wird am Boden des Reaktors abgelassen. Man erhält 154,5 kg einer Bipolymer-Dispersion mit einem Feststoffgehalt von 23,8 Gew.-%, die einen Gehalt an PPVE von 4,1 Gew.-% (1,54 Mol-%) und einen Melt-Flow-Index (MFI, bestimmt nach DIN 53 735: Gewichtsauflage 5 kg, 372 °C) von 1,6 aufweist. Der Schmelzpunkt beträgt 305 °C, die Partikelgrößenverteilung 31 nm (Mittelwert der Gewichtsverteilung) und 25 nm (Mittelwert der Anzahlverteilung).

Analog wurden die in der folgenden Tabelle wiedergegebenen Beispiele durchgeführt:

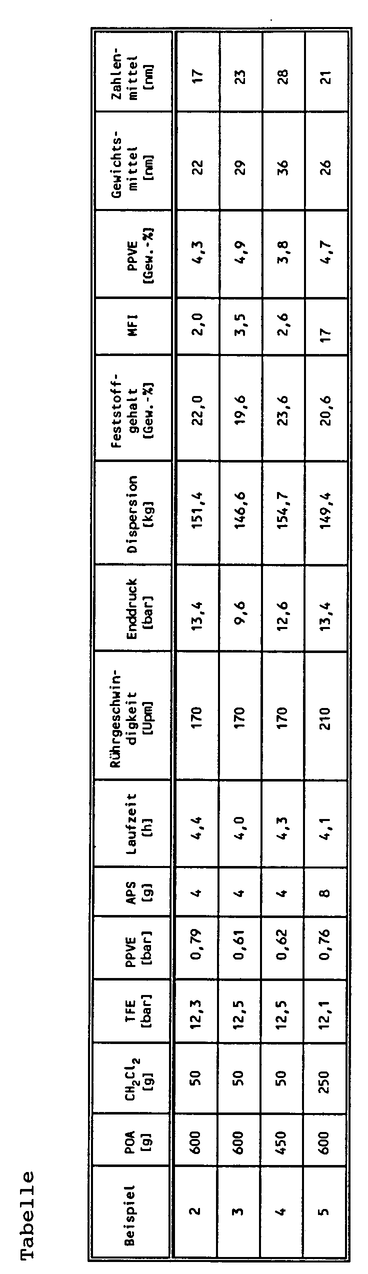

### Beispiel 6

Ein Apparatebaugraphit, Biegefestigkeit 40 N/mm², Porenvolumen 5 %, mittlerer Porendurchmesser 0,1 µm, Permeabilitätskoeffizient 10⁻⁴ cm²/s (beziehbar von Ringsdorff-Werke GmbH, Bonn-Mehlem) wurde in einen nach dem Vakuum-Druck-Verfahren arbeitenden Imprägnierautoklav gebracht. Nach dem Verschließen des Autoklav wurde der Innenraum des Autoklav mittels einer ölgedichteten Drehschieberpumpe 15 Stunden lang evakuiert. Unter Aufrechterhaltung des Vakuums wurde sodann der Graphitkörper durch langsames Einfließenlassen einer Dispersion nach Beispiel 1 mit dieser Dispersion überschichtet und der Druck nach dem vollständigen Überschichten des Graphitkörpers innerhalb von 100 Minuten auf 10 bar gesteigert. Dieser Druck wurde über eine Zeit von 144 Stunden aufrechterhalten. Danach wurde langsam (während mehr als 5 Minuten) eine Druckentlastung auf Normaldruck vorgenommen, die im Autoklav verbliebene Dispersion abgelassen und der Körper aus dem Autoklav entfernt.

Zum Fixieren des Polymerüberzugs wurde der Graphitkörper sodann in einem Ofen zunächst für 24 Stunden auf einer Temperatur von 120 °C gehalten und danach für 1 Stunde auf 360 °C erhitzt. Der so hergestellte imprägnierte Graphitkörper hatte eine Gaspermeabilität von 5 · 10⁻⁶ cm²/s. Er wies auf der Oberfläche eine festhaftende Polymerschicht auf, die zusätzlich durch in die Poren des Körpers eingedrungenes Polymer fest mit dem Körper verankert war. Der Körper zeigte eine exzellente Beständigkeit gegenüber aggressiven Chemikalien wie 80%ige Schwefelsäure beim Kochpunkt (circa 202 °C), 10%ige Salpetersäure beim Kochpunkt (circa 104 °C) oder 10%ige Natronlauge beim Kochpunkt (circa 102 °C).

### Beispiel 7

Ein Körper aus einer Graphitqualität mit den Kenndaten Biegefestigkeit 35 N/mm², Porenvolumen 12 bis 14 %, mittlerer Porendurchmesser 1 bis 3 µm, der gas- und flüssigkeitsdurchlässig war (beziehbar von Ringsdorff-Werke GmbH, Bonn-Mehlem) wurde unter Anwendung der gleichen Imprägnierbedingungen und des gleichen Imprägniermittels, wie unter Beispiel 6 beschrieben worden ist, imprägniert, und es wurde das durch Imprägnieren eingebrachte Polymer in gleicher Weise, wie unter Beispiel 6 beschrieben, fixiert. Der fertig behandelte Körper hatte eine Permeabilität von 10⁻⁵ cm²/s, wies eine festhaftende, auch in den Poren der Oberflächen fest verankerte, ohne Zerstörung nicht mehr lösbare Polymerschicht auf und war gegen die in Beispiel 6 genannten Agenzien gleichermaßen beständig.

### Beispiel 8

Ein Blockwärmeaustauscher mit einem Durchmesser von 260 mm und einer Höhe von 255 mm mit Kanälen für die Produktführung von 8 mm Durchmesser und Kanälen für die Kühlmittelführung von 8 mm Durchmesser aus dem auch in Beispiel 6 verwendeten Apparatebaugraphit wurde in gleicher Weise, wie dies in Beispiel 6 beschrieben worden ist, mit einer Oberflächenbeschichtung aus dem Bipolymer versehen. Einziger Unterschied zur Verfahrensweise nach Beispiel 6 war, daß der imprägnierte Wärmetauscherblock beim Fixieren des Überzugs statt 24 Stunden 48 Stunden bei einer Temperatur von 120 °C gehalten worden war. Der fertig behandelte Block war gas- (Beaufschlagung mit 2 bar Luft unter Wasser) und flüssigkeitsdicht (Beaufschlagung mit 8 bar Wasser produktseitig gegen Luft unter Normaldruck) und in gleicher Weise beständig gegen Schwefelsäure, Salpetersäure und Natronlauge, wie dies für die Körper der Beispiele 6 und 7 beschrieben worden ist.

### Beispiel 9

Ein Apparatebaugraphit der Qualität, wie sie in Beispiel 6 beschrieben worden ist, wurde unter den gleichen Verfahrensbedingungen wie in Beispiel 6 beschrieben unter Verwendung einer Polymerdispersion der Zusammensetzung 95,9 % TFE-Einheiten und 4,1 % PPVE-Einheiten mit einem Feststoffgehalt von 23 Gew.-%, einer Teilchengröße von 90 bis 100 nm und mit einem Schmelzindex MFI (DIN 53735, ASTM 1268-62 T) des dispergierten Feststoffs von 18 g/10 Minuten imprägniert und durch Fixieren des durch das Imprägnieren ein- und aufgebrachten Polymers mit einem Überzug versehen. Die Permeabilität des Körpers betrug in diesem Falle 10⁻⁵ cm²/s. Der abgeschiedene Polymerüberzug war nicht so gut wie bei der Beschichtung nach Beispiel 6 in den von der Oberfläche ausgehenden Poren verankert, haftete jedoch noch hinreichend gut. Die Beständigkeit gegenüber den bereits beschriebenen Agenzien war im Vergleich zu den in den Beispiel 6, 7 und 8 beschriebenen Ergebnissen nicht verändert.

### Beispiel 10

Die in Beispiel 9 beschriebene Vorgehensweise wurde unter Verwendung eines Körpers aus der auch in Beispiel 7 verwendeten Graphitqualität (Biegefestigkeit 35 N/mm², Porenvolumen 12 bis 14 %, mittlerer Porendurchmesser 1 bis 3 µm, gas- und flüssigkeitsdurchlässig) mit der unter Beispiel 9 charakterisierten Dispersion durchgeführt. Die Permeabilität des beschichteten Körpers betrug 5 · 10⁻⁵ cm²/s. Der abgeschiedene Polymerüberzug haftete hinreichend gut auf der Körperoberfläche. Die Beständigkeit gegenüber den in den vorstehenden Beispielen genannten Agenzien war unverändert gut.

### Beispiel 11

Ein Siliciumcarbidteil, flüssigkeitszugängliches Porenvolumen 4 %, mittlerer Porendurchmesser 0,5 µm (Qualität EKasic D, Lieferant Elektroschmelzwerk Kempten) mit den Abmessungen 50 x 25 x 5 mm wurde mit der in Beispiel 6 verwendeten Dispersion unter folgenden Bedingungen in einem Autoklav nach der Vakuum-Druck-Methode imprägniert: Der im Autoklav befindliche Körper wurde 15 Stunden lang mittels einer ölgedichteten Drehschieberpumpe evakuiert und danach langsam mit der Dispersion überschichtet. Sodann wurde innerhalb von 100 Minuten unter linearem Anstieg ein Imprägnierdruck von 10 bar aufgebaut und dieser für eine Zeit von 72 Stunden gehalten. Nachfolgend wurde innerhalb von 5 Minuten auf Atmosphärendruck entspannt, die Imprägnierflüssigkeit abgelassen und der Körper aus dem Autoklav genommen. Zum Fixieren des in den Körper ein- und des auf den Körper aufgebrachten Polymer wurde der Körper zunächst 24 Stunden bei 120 °C und dann 1 Stunde lang bei 360 °C getempert. Nach dieser Behandlung hatte der Körper einen auf seiner ganzen Oberfläche festhaftenden gas- und flüssigkeitsdichten Polymerüberzug, der zusätzlich in den Poren gut verankert war. Die Eindringtiefe des Polymers in die von der Oberfläche zugänglichen Poren betrug im Mittel 0,4 mm. Die Beständigkeit gegenüber den in den vorstehenden Beispielen bereits genannten Chemikalien war, wie dort beschrieben worden ist, auch hier ausgezeichnet.

## Patentansprüche

1. Verfahren zum Beschichten von porösen, hydrophoben Substraten mit thermoplastischen Fluorpolymeren, wobei das Substrat mit einer wäßrigen Dispersion eines thermoplastischen Fluorpolymeren einer Teilchengröße im Zahlenmittel bis zu 100 nm in Kontakt gebracht wird, gegebenenfalls unter Druck, worauf das so imprägnierte Substrat zur Fixierung des Fluorpolymeren thermisch nachbehandelt wird.

2. Verfahren nach Anspruch 1, wobei die Imprägnierung des Substrats mit der Dispersion unter Druck erfolgt.

3. Verfahren nach Anspruch 1 oder 2, wobei die thermische Nachbehandlung zunächst bei einer Temperatur von 100 bis 150 °C und anschließend bei einer genügend hohen Temperatur erfolgt, um ein Sintern oder Schmelzen des Fluorpolymeren unter Ausbildung eines dichten Überzugs zu gewährleisten.

4. Verfahren nach einem oder mehreren der vorhergehenden Ansprüche, wobei die Teilchengröße in der Fluorpolymerdispersion im Zahlenmittel bis zu 50 nm beträgt.

5. Verfahren nach einem oder mehreren der vorhergehenden Ansprüche, wobei die Teilchengröße in der Fluorpolymerdispersion im Zahlenmittel bis zu 30 nm beträgt.

6. Verfahren nach einem oder mehreren der vorhergehenden Ansprüche, wobei das Fluorpolymere ein Copolymer mit Einheiten von Tetrafluorethylen und einem Fluoralkyl-perfluorvinylether ist.

7. Verfahren nach Anspruch 6, wobei das Copolymer zusätzlich Einheiten von Hexafluorpropen enthält.

8. Verwendung der nach einem oder mehreren der vorhergehenden Ansprüche erhaltenen beschichteten Substrate im chemischen Apparatebau.

## Claims

1. A process for coating porous, hydrophobic substrates with thermoplastic fluoropolymers, which comprises bringing the substrate into contact with an aqueous dispersion of a thermoplastic fluoropolymer having a number-average particle size of up to 100 nm, if appropriate under pressure, and then after-treating the substrate thus impregnated with heat to fix the fluoropolymer.

2. The process as claimed in claim 1, wherein the impregnation of the substrate with the dispersion takes place under pressure.

3. The process as claimed in claim 1 or 2, wherein the after-treatment with heat is carried out first at a temperature of 100 to 150°C and then at a sufficiently high temperature to ensure sintering or fusion of the fluoropolymer to form a dense coating.

4. The process as claimed in one or more of the preceding claims, wherein the number-average particle size in the fluoropolymer dispersion is up to 50 nm.

5. The process as claimed in one or more of the preceding claims, wherein the number-average particle size in the fluoropolymer dispersion is up to 30 nm.

6. The process as claimed in one or more of the preceding claims, wherein the fluoropolymer is a copolymer with units of tetrafluoroethylene and a fluoroalkyl perfluorovinyl ether.

7. The process as claimed in claim 6, wherein the copolymer additionally contains units of hexafluoropropene.

8. The use of a coated substrate obtained according to one or more of the preceding claims in chemical apparatus construction.

## Revendications

1. Procédé pour revêtir des substrats hydrophobes poreux de fluoropolymères thermoplastiques, dans lequel le substrat est, éventuellement sous pression, mis en contact avec une dispersion aqueuse d'un fluoropolymère thermoplastique ayant une granulométrie moyenne en nombre allant jusqu'à 100 nm, ce après quoi le substrat imprégné est, pour fixer le fluoropolymère, soumis à un post-traitement thermique.

2. Procédé selon la revendication 1, dans lequel l'imprégnation du substrat par la dispersion est réalisée sous pression.

3. Procédé selon la revendication 1 ou 2, dans lequel le post-traitement thermique est réalisé d'abord à une température de 100 à 150°C, puis à une température suffisamment haute pour garantir un frittage ou une fusion du fluoropolymère, avec formation d'un revêtement étanche.

4. Procédé selon une ou plusieurs des revendications précédentes, dans lequel la granulométrie moyenne en nombre de la dispersion fluoropolymère va jusqu'à 50 nm.

5. Procédé selon l'une ou plusieurs des revendications précédentes, dans lequel la granulométrie moyenne en nombre de la dispersion fluoropolymère va jusqu'à 30 nm.

6. Procédé selon l'une ou plusieurs des revendications précédentes, dans lequel le fluoropolymère est un copolymère comportant des motifs de tétrafluoréthylène et un fluoralkyl-perfluorovinyléther.

7. Procédé selon la revendication 6, dans lequel le copolymère contient en outre des motifs d'hexafluoropropène.

8. Utilisation des substrats revêtus, obtenus selon l'une ou plusieurs des revendications précédentes, dans la construction des appareils chimiques.
